# EUROPÄISCHE PATENTSCHRIFT

(11) **EP 2 639 908 B1**
(45) Veröffentlichungstag und Bekanntmachung des Hinweises auf die Patenterteilung: **06.05.2020**
(21) Anmeldenummer: 13158532.5
(22) Anmeldetag: 11.03.2013
(51) Int. Cl.: H02G 3/06, H02G 3/04

(54) **Kabelkanalsystem**
Cable conduit system
Système de caniveaux de câbles

(30) Priorität: 12.03.2012 DE 202012100869 U
(43) Veröffentlichungstag der Anmeldung: 18.09.2013
(73) Patentinhaber: OBO Bettermann Produktion Deutschland GmbH & Co.KG, 58710 Menden (DE)
(72) Erfinder: Zimm, Christof, 91058 Erlangen (DE); Seidel, Bernd, 08209 Auerbach (DE); Salzhuber, Frank, 90419 Nürnberg (DE); Engelbrecht, Bernd Jürgen, 90763 Fürth (DE); Künzel, Werner, 95111 Rehau (DE); Christ, Michael, 95028 Hof (DE); Friedrich, Jochen, 95119 Naila (DE)
(74) Vertreter: Haverkamp, Jens

(56) Entgegenhaltungen:
- DE-U1- 8 410 740
- DE-U1- 29 817 946
- DE-U1-202004 005 987
- DE-U1-202007 009 424
- DE-U1-202008 014 724
- DE-U1-202010 015 292
- NL-C- 2 004 158

## Beschreibung

Die Erfindung betrifft ein Kabelkanalsystem umfassend Kabelkanalelemente, welche mittels wenigstens einem Kupplungselement in ihrer Längsrichtung aneinander fügbar sind, wobei die Kabelkanalelemente aus einem etwa U-förmigen Kanalunterteil sowie insbesondere einer daran anordenbaren Abdeckung bestehen, wobei das Kupplungselement lösbar und /oder verschiebbar in die freien Endbereiche der Kabelkanalelemente einsetzbar ist, wobei das an den Endbereichen eines Kabelkanalelementes an mindestens einer der Seitenwand geführte Kupplungselement wenigstens zwei Federsysteme aufweist.

Derartige Kabelkanalsysteme sind in den einschlägigen Branchen allgemein bekannt und haben sich seit Jahren bewährt. Die Kabelkanalsysteme sind je nach Einsatzbedingungen als Kunststoffteile, hergestellt im Extrusions- bzw. Koextrusionsverfahren, als Aluminiumstrangpressteile oder auch als gekantete Metallblechprofile lieferbar.

Dabei werden die Kabelkanalelemente in festen definierten Längen geliefert, so dass bei der Verlegung bzw. der Montage von längeren Kabelkanalsystemen mehrere einzelne Kabelkanalelemente an ihren Stirnseiten zusammengesetzt werden müssen, so dass der Bereich des Aneinanderfügens der einzelnen Kabelkanalelemente ein Problem dahingehend sein kann, dass bei der stirnseitigen Montage möglichst kein Versatz bzw. kein Spalt zwischen den einzelnen Kabelkanalelementen eintreten darf.

Für die Umsetzung derartiger stirnseitiger Montage von einzelnen Kabelkanalelementen sind aus dem Stand der Technik verschiedene Lösungen bekannt.

So wird beispielsweise in der DE 295 10 836 U1 die Verwendung von Winkelstücken aus Metall zur Verstärkung von im Winkel verlegten Kabelkanalelementen beschrieben, wobei die Verstärkungen in vorgesehenen Taschen in den auf Gehrung geschnittenen Enden der Kabelkanalelemente eingeschoben werden.

Weiterhin wird in der EP 0 721 243 A eine weitere Verbindungsmöglichkeit von zwei stirnseitig zu montierenden Kabelkanalelementen beschrieben. Die Kabelkanalelemente mit einem U-förmigen, einseitig offenem Unterteil mit Boden, zwei Seitenwänden, zwei schmalen, parallel zum Boden verlaufenden Deckleisten mit etwa L-förmigem Querschnitt und zwei an der Innenseite des Bodens angeformten Längsleisten und mit zwei zur Verbindung zweier Kanalabschnitte dienenden Kupplungselementen sind so ausgestaltet, dass das Kupplungselement aus einer Rückenplatte, einer etwa im rechten Winkel abgewinkelten Fußleiste, einer im stumpfen Winkel abgewinkelten Kopfleiste und zwei etwa im rechten Winkel abgewinkelten Stirnleisten besteht und dass etwa im Zentrum der Rückenplatte durch einen dreiseitigen Freischnitt eine Zunge gebildet ist, die auf ihrer Seite eine Nase trägt. Nachteilig bei dieser Verbindungsmöglichkeit wird gesehen, dass bei der stirnseitigen Montage einzelner Kabelkanalelemente die bereits auf einem Kabelkanalelement angeordnete Kupplung durch das zweite zu montierende Kabelkanalelement in den Kanal zurückgeschoben und dieses zusätzliche Kabelkanalelement somit nicht montierbar ist.

Ein weiterer Nachteil wird darin gesehen, dass die beschriebenen Kupplungselemente jeweils nur für eine definierte Geometrie von Kabelkanalelementen einsetzbar sind, was die Herstellungskosten und die Lagerhaltungskosten dieser Lösung erhöht.

Weiterhin nachteilig wird gesehen, dass diese Kupplungselemente immer nur an einer Seitenwand des Kabelkanalelementes einsetzbar sind, was die Lagerhaltungskosten erhöht und bei der Montage zu Verwechslungen führen kann.

In DE 20 2008 014 724 U1 ist ein Kupplungselement zur Verbindung zweiter Kabelkanalabschnitte offenbart. Das Kupplungselement besteht aus einem Seitenelement, einer an dem Seitenelement ausgebildeten Kopfleiste, die mit Deckelverschlussprofilen eines Kanalunterteils kooperiert, einer an dem Seitenelement ausgebildeten federnden Zunge und einem an dem Seitenelement angewinkelten Ausleger, der ein- und ausklappbar ist. Das Kupplungselement wird als einstückig beschrieben. Da das Kupplungselement für einen ausreichenden Potentialausgleich zwischen den Kabelkanalabschnitten bei Metallkanälen sorgen soll, ist das Kupplungselement zumindest zum Teil aus einem elektrisch leitfähigen Material gefertigt.

In DE202004005987U ist ein Kupplungselement für ein Kabelkanalsystem nach dem Oberbegriff des Anspruchs 1 beschrieben, das aus Kunststoff hergestellt wird; in einer zweiten Ausführung aus Metall kann das Kupplungselement auch für den Potenzialausgleich zwischen zwei zu verbindenden Kabelkanalelementen sorgen.

In NL 2 004 158 C ist ein weiteres einstückiges Kupplungselement für Kabelabschnitte beschrieben.

In DE 298 17 946 U1 ist ein Elektroinstallationskanal aus axial aneinandergesetzten Kanalprofilen aus elektrisch leitendem Werkstoff offenbart, wobei benachbarte Kanalprofile über Anschlussteile zum Potentialausgleich miteinander verbunden sind. Die Anschlussteile sind als Bleche vorgesehen, die im Kanalquerschnitt mit ihren Seitenkanten verklemmt und an der der Kanalöffnung zugewandten Seite mit mindestens einem von den Seitenkanten abgebogenen Zahn versehen sind, wobei der Zahn in eine Wand eines dem Klemmbereich der Seitenkanten benachbarten Vorsprunges des Kanalprofils eingekrallt ist. Die Anschlussbleche werden in den Figuren als einstückige Bestandteile dargestellt.

In DE 84 10 740 U1 ist eine Schutzleiterbrücke für wannenförmige Gerätekanäle aus Stahlblech oder aus sonstigen leitfähigen Material offenbart. Die Seitenwände der Schutzleiterbrücke sind an den Außenkanten umgebördelt, wobei die aus Stahlfederblech oder einem sonstigen leitfähigen, entsprechend federelastischen Material bestehende Leiterschutzbrücke als ein an einem Ende etwa rechtwinklig umgebördeltes Federblatt ausgebildet ist. Die Schutzleiterbrücke ist ein einstückiges Bauteil.

In DE 20 2007 009 424 U1 ist eine Erdungsklammer zum Potentialausgleich von Leitungsführungskanälen offenbart. Die Erdungsklammer oder auch Erdungskupplung für Leitungsführungskanäle ist aus Metall und weist ein Deckelement, ein zur Kanalaußenwand angeordnetes Seitenelement, ein zur Kanalmitte angeordnetes Seitenprofil, Kontaktspitzen zur elektrischen Kontaktierung des Kanalunterteils auf, wobei an dem Seitenelement durch einen dreiseitigen Freischnitt wenigstes eine Zunge ausgebildet ist, wobei an dem Seitenprofil ein U-förmiges Halteprofil ausgebildet ist und wobei die Kontaktspitzen an dem Seitenprofil ausgebildet sind, sodass diese im eingesetzten Zustand der Erdungskupplung mit dem Kanalunterteil einen elektrischen Potentialausgleich bewirken.

In der DE 297 11 068 U1 wird ein weiteres Kabelkanalsystem beschrieben, bei dem das in die Kabelkanalelemente einfügbare Kupplungselement insbesondere zum Potenzialausgleich bei Kabelkanalelementen aus Metall offenbart ist. Dabei wird ein aus Federblech bestehendes Übertragungselement sowohl in den Kabelkanal als auch in dessen Abdeckung eingesetzt und jeweils mit einer Potenzialausgleichsleitung verbunden, wobei das Übertragungselement einerseits zwei axial aneinander gesetzte Teilkanäle und andererseits ihre axial aneinandergesetzten Abdeckungen jeweils leitend miteinander verbindet, wobei das Übertragungselement ein gestanztes, gestrecktes Bauteil aus Metall ist, welches an seinen Längsrändern Kontaktspitzen trägt, die ein geringfügiges Übermaß zum lichten Innenmaß des Kabelkanalunterteils aufweisen und dass das Übertragungselement wenigstens an einem seiner freien Querränder in Form wenigstens einer Kontaktspitze nach oben zur elektrischen Kontaktierung des Deckelteils aufgebogen ist.

Derartige Kupplungselemente insbesondere zum Potenzialausgleich bei Kabelkanalelementen aus Metall haben sich bewährt, sind jedoch insbesondere bei ihrer Verwendung zur stirnseitigen Montage nebeneinander anzuordnender Kabelkanalelemente nicht geeignet.

Hier setzt die Erfindung ein, die sich die Aufgabe gestellt hat, ein Kabelkanalsystem aufzuzeigen, welches die Nachteile des Standes der Technik überwindet, welches kostengünstig und wirtschaftlich herstellbar ist, bei dem einzelne Kabelkanalelemente schnell, sicher sowie kostengünstig stirnseitig montierbar sind und das neben einer verbesserten Montagefreundlichkeit auch eine Potentialausgleichsmöglichkeit bietet.

Erfindungsgemäß wird diese Aufgabe durch die Merkmale des Anspruches 1 gelöst. Weitere vorteilhafte Ausgestaltungen sind in den Unteransprüchen beschrieben.

Es hat sich überraschend herausgestellt, dass ein Kabelkanalsystem umfassend Kabelkanalelemente, welche mittels wenigstens einem Kupplungselement in ihrer Längsrichtung aneinander fügbar sind, wobei die Kabelkanalelemente aus einem etwa U-förmigen Kanalunterteil sowie insbesondere einer daran anordenbaren Abdeckung bestehen, wobei das Kupplungselement lösbar und / oder verschiebbar in die freien Endbereiche der Kabelkanalelemente einsetzbar ist, wobei das an den Endbereichen eines Kabelkanalelementes an mindestens einer der Seitenwand geführte Kupplungselement wenigstens zwei Federsysteme aufweist, sich dadurch auszeichnet, dass das Kupplungselement über wenigstens ein Element, welches wenigstens teilweise aus einem elektrisch leitfähigem Werkstoff hergestellt ist, von der Seitenwand des Kabelkanalelements beabstandet, mit dieser in Wirkverbindung stehend, angeordnet ist. Durch diese vorteilhafte Ausgestaltung des erfindungsgemäßen Kabelkanalsystems ist eine stirnseitige Montage einzelner Kabelkanalelemente jederzeit problemlos möglich, sodass das zeit- und kostenaufwändige Nacharbeiten an Kupplungselementen, an Kabelkanalelementen und dergleichen nicht erforderlich ist.

Das erfindungsgemäße Kabelkanalsystem ist weiterhin so ausgebildet, dass im Auslieferungszustand das Kupplungselement bereits an den freien Endbereichen der Kabelkanalelemente eingesetzt ist, so dass eine praxisgerechte Montage auf der Baustelle jederzeit möglich ist und die Kupplungselemente während Transport und Montage unverlierbar angeordnet, die stirnseitige Montage problemlos ermöglichen, ohne dass Versatz oder Spalten entstehen.

Das erfindungsgemäße Kabelkanalsystem ist vorteilhafterweise so ausgebildet, dass das Element stoffschlüssig mit dem Kupplungselement verbunden ist. Hierdurch ist sichergestellt, dass die stirnseitige Montage von Kabelkanalelementen einfach sowie kostengünstig möglich ist, wobei die stirnseitig montierten Kabelkanalelemente über das am Kupplungselement fixierte Element in elektrischer Wirkverbindung stehen.

Ein weiterer Vorteil des erfindungsgemäßen Kabelkanalsystems besteht darin, dass das Element kraftschlüssig und/oder formschlüssig mit dem Kupplungselement verbunden ist. In dieser vorteilhaften Ausführungsform können einerseits die bereits beschriebenen Vorteile des erfindungsgemäßen Kabelkanalsystems realisiert werden und andererseits ist es möglich, das Element, welches beispielsweise aus Metall hergestellt ist, vom Kupplungselement, welches beispielsweise aus einem polymeren Werkstoff hergestellt ist, bei der Entsorgung des erfindungsgemäßen Kabelkanalsystems werkstoffgerecht zu recyceln.

Das Element weist eine Öffnung auf. Mit der Anordnung und Dimensionierung dieser Öffnung kann das Element sehr schnell und einfach am Kupplungselement positioniert und ggf. fixiert werden.

Das Element weist selbst wenigstens ein Kontaktmittel auf. Dieses Kontaktmittel, welches beispielsweise federnd am Element selbst angeordnet ist, kann so positioniert sein, dass es die beiden stirnseitig miteinander zu verbindenden Kabelkanalelemente kontaktiert und so in elektrische Wirkverbindung bringt.

Dabei ist am freien Ende des Kontaktmittels wenigstens ein im Querschnitt etwa dreieckförmig ausgebildetes Kontaktelement angeordnet. Diese Ausführungsform des erfindungsgemäßen Kabelkanalsystems ermöglicht es, dass beispielsweise bei stirnseitig zu montierenden Kabelkanalelementen aus Metall, welche durch eine Beschichtung in Form von Farbe bzw. Folie versehen sind, trotzdem über die am Mittel angeordneten Kontaktelemente des Kupplungselementes eine elektrische Wirkverbindung zwischen stirnseitig zu montierenden Kabelkanalelementen zu realisieren.

Ein weiterer Vorteil des erfindungsgemäßen Kabelkanalsystems besteht darin, dass das Kontaktelement über wenigstens ein Verbindungsmittel mit dem Element selbst verbunden ist.

Hierdurch lässt sich einerseits die Herstellung des am Kupplungselement anzuordnenden Elements erheblich reduzieren und andererseits kann hierdurch die Kraft des aus dem Verbindungsmittel und dem Kontaktelement bestehenden Kontaktmittels den Anforderungen an verschiedene Kabelkanalelemente entsprechend dimensioniert werden, so dass beim Einbringen des Kupplungselementes in die Kabelkanalelemente eine einfache Montage sowie ein Potenzialausgleich problemlos möglich ist.

Das erfindungsgemäße Kabelkanalsystem ist vorteilhafterweise so ausgebildet, dass zwei Kontaktmittel einander gegenüberliegend an einer Öffnung des Elements angeordnet sind. Dies führt dazu, dass das Mittel beispielsweise aus einem metallischen Material in Form eines prismatischen Bleches kostengünstig durch an sich bekannte Stanz- und Umformverfahren zum Element mit Kontaktmitteln herstellbar ist.

Es hat sich weiterhin als vorteilhaft herausgestellt, dass das Kontaktmittel in einem etwa spitzen Winkel von der Oberfläche des Elements wegragt und dabei sowohl parallel als auch orthogonal zum Federsystem des Kupplungselementes angeordnet sein kann.

Ein weiterer Vorteil des erfindungsgemäßen Kabelkanalsystems besteht darin, dass die Federsysteme etwa parallel über eine Öffnung voneinander beabstandet angeordnet sind, wobei ein erstes Federelement in einem etwa spitzen Winkel zu einem zweiten Federelement über wenigstens einen Steg beabstandet, miteinander verbunden ist. Durch diese vorteilhafte Ausgestaltung lässt sich das Kupplungselement einfach und schnell an den Seitenwänden der Kabelkanalelemente anbringen und vom Auslieferungszustand, in dem das Kupplungselement nicht über die Stirnseite der Kabelkanalelemente herausragt, in den Montagezustand, bei dem das Kupplungselement etwa über die Stirnseiten der Kabelkanalelemente herausragt, leicht verschieben, sicher positionieren und die elektrische Wirkverbindung zwischen den Kabelkanalelementen sicher realisieren.

Es hat sich weiterhin als vorteilhaft herausgestellt, dass das Kupplungselement wenigstens ein von seiner Oberfläche wegragendes Rastelement aufweist, über welches das Element kraftschlüssig am Kupplungselement anordenbar ist. Über diese Rastmittel ist es sehr einfach möglich, dass das Element, welches entsprechend positionierte Öffnungen aufweist, auf das Kupplungselement aufgelegt und über diese Rastelemente kraftschlüssig mit diesem verbunden wird.

Ein weiterer Vorteil des erfindungsgemäßen Kabelkanalsystems besteht darin, dass das Kupplungselement wenigstens ein von seiner Oberfläche wegragendes Positionierelement aufweist. Dieses Positionierelement kann vorteilhafterweise so ausgebildet sein, dass es den Spalt zwischen der Oberfläche des Kupplungselementes und der Seitenwand des Kabelkanalelementes überbrückt und das Kupplungselement somit abstützt, da dieses Positionierelement in etwa die gleiche Höhe aufweist wie der Steg der Federsysteme.

Es liegt jedoch auch im Rahmen der Erfindung, dass das Positionierelement eine geringere Höhe aufweist, etwa die Höhe der am Kupplungselement angeordneten ersten Führungselemente.

Das Positionierelement hat jedoch noch einen weiteren Vorteil, es dient dazu, dass das Element über genau positionierte Öffnungen auf dieses Positionierelement aufbringbar ist und dass danach das Positionierelement selbst zur Fixierung des Elements verwendbar ist, indem dieses verpresst, verformt oder dergleichen verändert wird.

Eine weitere vorteilhafte Ausgestaltung des erfindungsgemäßen Kabelkanalsystems besteht darin, dass das Kupplungselement aus einem elektrisch nicht leitfähigen Werkstoff hergestellt ist. Hierdurch ist sichergestellt, dass die Positionierung bei der stirnseitigen Montage der Kabelkanalelemente einfach realisierbar ist und dass über das Element, welches aus einem elektrisch leitfähigen Werkstoff besteht, der Potenzialausgleich realisierbar ist. Das Kupplungselement kann dabei aus einem polymeren Werkstoff hergestellt sein. Unter polymerem Werkstoff sind Materialien gemeint, wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien. Dabei können dem polymeren Werkstoff des Kupplungselementes geeignete Füll- und / oder Verstärkungsstoffe beigemischt sein, die die mechanischen Eigenschaften positiv beeinflussen insbesondere Glasfaser, Glaskugeln aber auch Füllstoffe wie Kreide, Teflon und dergleichen.

Ein weiterer Vorteil dieser Ausführungsform besteht darin, dass durch die Positionierung des Elements im Spalt zwischen dem Kupplungselement und der Seitenwand des Kabelkanalelementes dieses im montierten Zustand nicht mehr sichtbar bzw. auch nicht mehr berührbar ist. Somit ist sichergestellt, dass im Kabelkanalelement verlegte elektrische Leiter bzw. Bauteile mit dem elektrisch leitfähigen Element nicht in Berührung kommen können. Da sich die am Element angeordneten Kupplungsmittel nur im Spalt zwischen dem Kupplungselement und der Seitenwand des Kabelkanalelementes befinden, wird ein weiterer Vorteil dieser Ausführungsform darin gesehen, dass die im Kabelkanalelement verlegten Drähte, Kabel und dergleichen durch die scharfkantigen Kontaktmittel nicht beschädigt werden können.

Es ist weiterhin von Vorteil, dass das Kupplungselement wenigstens ein in etwa parallel zu den Federsystemen angeordnetes erstes Führungselement aufweist. Dieses erste Führungselement erleichtert die Positionierung des an der Seitenwand des Kabelkanalelementes anzubringenden Kupplungselementes insbesondere durch eine leichte Einführschräge, so dass das Kupplungselement schnell und einfach an den Seitenwänden der Kabelkanalelemente anordenbar bzw. verschiebbar ist.

Eine weitere ebenfalls vorteilhafte Ausgestaltung des erfindungsgemäßen Kabelkanalsystems besteht darin, dass das Kupplungselement wenigstens ein von seiner Oberfläche wegragendes in etwa orthogonal zu dem ersten Führungselement angeordnetes zweites Führungselement aufweist. Dieses dient einerseits vorteilhafterweise zur Erhöhung der Stabilität der Kupplungselemente und andererseits verbessert dieses zweite Führungselement die Handhabbarkeit beim Einschieben bzw. beim Herausziehen der Kupplungselemente an den Seitenwänden der Kabelkanalelemente.

Ein weiterer Vorteil dieser Ausführungsform besteht darin, dass das erste Führungselement und das zweite Führungselement einen Aufnahmeraum bilden, in dem das Element im bzw. am Kupplungselement einbringbar bzw. anbringbar ist.

Weiterhin ist das Element des Kupplungselementes so ausgebildet, dass es wenigstens eine Vertiefung aufweist. Diese Vertiefung dient einerseits dazu, dass das Element selbst über die Geometrie sowie die Ausdehnung dieser Vertiefung stabilisiert bzw. versteift ist und andererseits dazu, dass das Element bei der Montage auf bzw. im Kupplungselement in äquivalente Vertiefungen einführbar und somit nicht verschiebbar angeordnet ist. Somit ist bei bestimmungsgemäßem Gebrauch des Kupplungselementes an den Seitenwänden der Kabelkanalelemente sichergestellt, dass bei Montage bzw. Demontage das Element kraftschlüssig bzw. formschlüssig am Kupplungselement angeordnet ist und bleibt.

Dies führt weiterhin vorteilhafterweise dazu, dass das Kupplungselement mit dem daran angeordneten Element einerseits zur Verbindung sowie zum Potenzialausgleich von Kabelkanalelementen aus metallischen Werkstoffen und andererseits auch durch Entfernen des Elements zur Verbindung bzw. Montage von Kabelkanalelementen aus beispielsweise polymeren Werkstoffen bestens geeignet ist.

Das erfindungsgemäße Kabelkanalsystem ist weiterhin so ausgebildet, dass das Kupplungselement im Montagezustand über wenigstens einen Steg des Federsystems an der Stirnseite der Seitenwand des Kabelkanalelementes anliegt. Hierdurch wird beim erfindungsgemäßen Kabelkanalsystem sichergestellt, dass das Kupplungselement verschiebesicher arretiert, für die stirnseitige Montage eines weiteren Kabelkanalelementes positioniert und über die an der Seitenwand in elektrischer Wirkverbindung stehenden Kontaktmittel des Elements auch der spätere Potenzialausgleich möglich ist.

Dabei ist das erfindungsgemäße Kabelkanalsystem noch so ausgebildet, dass im Montagezustand die Fläche des Federsystems in etwa bündig an der Außenseite der Seitenwand des Kabelkanalelementes anliegt. Hierdurch ist es möglich, beim erfindungsgemäßen Kabelkanalsystem insbesondere bei der Montage unterhalb von Decken bzw. oberhalb von Böden, bei denen sowohl die Seitenwand als auch die Bodenwand des Kabelkanalelementes beidseitig anliegt, ein weiteres Kabelkanalelement einfach zu montieren und sicher über das Element zum Potenzialausgleich zu führen.

Die Erfindung soll nun an Ausführungsbeispielen, die diese nicht einschränken sollen, näher beschrieben werden.

Es zeigen:
- **Fig. 1:**: perspektivische Darstellung eines Ausschnittes eines erfindungsgemäßen Kabelkanalsystems,
- **Fig. 2:**: perspektivische Darstellung eines Kupplungselementes des erfindungsgemäßen Kabelkanalsystems,
- **Fig. 3:**: perspektivische Darstellung eines Kupplungselementes sowie eines Mittels des erfindungsgemäßen Kabelkanalsystems.

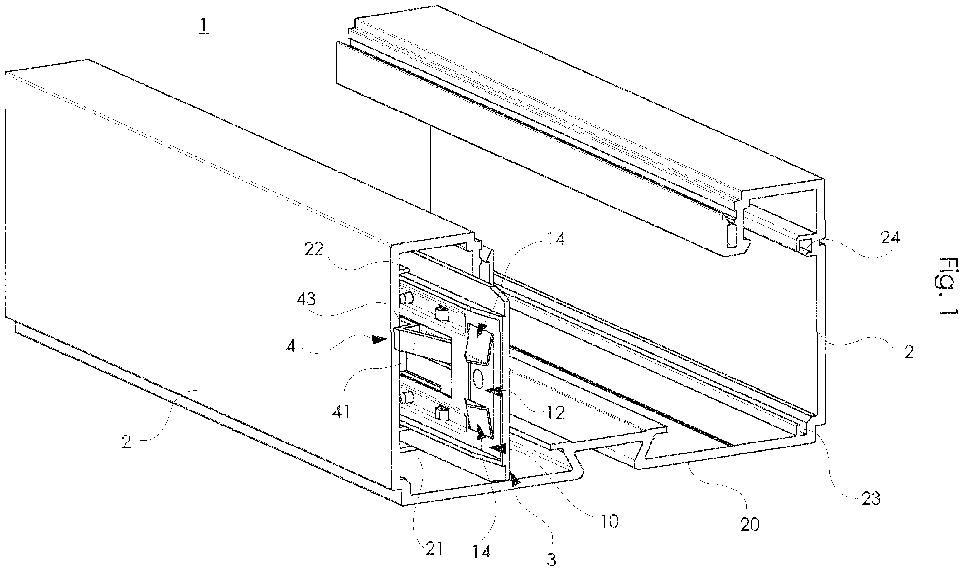

In der Fig. 1 ist eine perspektivische Darstellung eines Ausschnittes des erfindungsgemäßen Kabelkanalsystems dargestellt. Das Kabelkanalsystem umfasst ein Kabelkanalelement 1, welches mittels wenigstens einem Kupplungselement 3 in seiner Längsrichtung mit einem weiteren, hier nicht dargestellten, Kabelkanalelement 1 aneinander fügbar ist, wobei die Kabelkanalelemente 1 aus einem etwa U-förmigen Kanalunterteil sowie insbesondere einer daran anordenbaren und hier nicht dargestellten Abdeckung bestehen, wobei das Kupplungselement 3 lösbar und / oder verschiebbar in den freien Endbereichen der Kabelkanalelemente 1 einsetzbar ist, wobei das an den Endbereichen der Kabelkanalelemente 1 an mindestens einer der Seitenwand 2 geführte Kupplungselement 3 wenigstens zwei Federsysteme 4, 5 aufweist, wobei das Kupplungselement 3 über wenigstens ein Element 10, welches wenigstens teilweise aus einem elektrisch leitfähigem Werkstoff hergestellt ist, von der Seitenwand 2 des Kabelkanalelements 1 beabstandet, mit dieser in Wirkverbindung stehend, angeordnet ist.

In der Fig. 1 ist das Mittel 10 zumindest teilweise erkennbar, wobei das Mittel 10 an seinem einen freien Ende eine Öffnung 12 aufweist, an der zwei einander gegenüberliegend angeordnete Kontaktmittel 14 voneinander beabstandet angeordnet sind.

Die Kontaktmittel 14 sind in etwa einem spitzen Winkel von der Oberfläche des Mittels 10 sowie des Kupplungselementes 3 wegragend angeordnet. Die Kontaktmittel 14 führen somit im hier nicht sichtbaren Teil des Kabelkanalelementes 1 an der Seitenwand 2 zu einer elektrisch leitfähigen Wirkverbindung, da das Mittel 10 aus einem metallischen Werkstoff hergestellt ist. Das Kabelkanalelement 1 ist in diesem Ausführungsbeispiel ebenfalls aus einem metallischen Werkstoff hergestellt und mit einer an sich bekannten Beschichtung wie bspw. Farbe, Eloxal und dgl. veredelt.

Das dargestellte Federsystem 4 weist ein erstes Federelement 41 auf, das in etwa einem spitzen Winkel zu einem zweiten, hier nicht dargestellten, Federelement 42 über wenigstens einen Steg 43 beabstandet, miteinander verbunden ist.

Das Kabelkanalelement 1 weist an seinen Seitenwand 2 die Führungsschienen 21, 22, 24 sowie an der Bodenwand 20 die Führungsschiene 23 auf. Die Führungsschienen 21, 22, 23, 24 des Kabelkanalelementes 1 dienen dazu, dass das Kupplungselement 3 in diesen einführbar und so längsverschieblich an der Seitenwand 2 des Kabelkanalelementes 1 anordenbar ist.

Das Kupplungselement 3 des erfindungsgemäßen Kabelkanalsystems ist dabei so ausgebildet, dass es sowohl in den Führungsschienen 21, 22 der Seitenwand 2 als auch in den Führungsschienen 24 der Seitenwand 2 sowie der Bodenwand 20 einführbar bzw. verschiebbar ist.

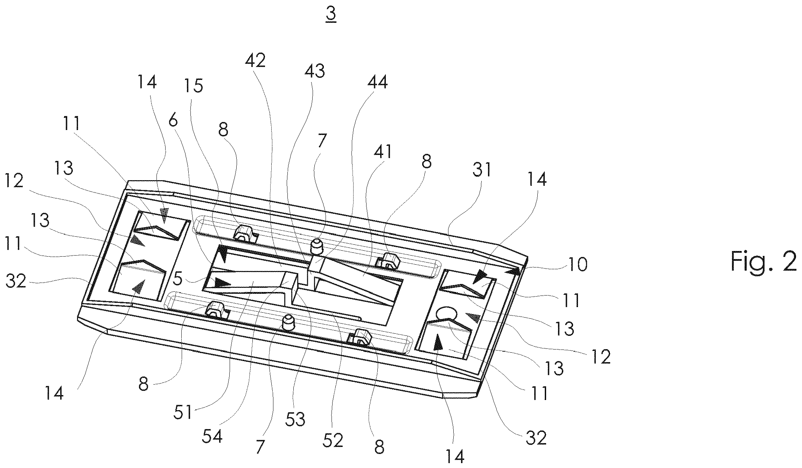

In der Fig. 2 ist eine perspektivische Darstellung des Kupplungselementes 3 des erfindungsgemäßen Kabelkanalsystems dargestellt. Das Kupplungselement 3 weist in diesem Ausführungsbeispiel zwei Federsysteme 4, 5 auf, die etwa parallel über die Öffnung 6 voneinander beabstandet angeordnet sind. Dabei ist ein erstes Federelement 41, 51 in etwa einem spitzen Winkel zu einem zweiten Federelement 42, 52 über wenigstens einen Steg 43, 53 beabstandet miteinander verbunden. In diesem Ausführungsbeispiel ist das erste Federelement 41, 51 einstückig über den Steg 43, 53 mit dem zweiten Federelement 42, 52 verbunden.

Der Steg 43, 53 ist dabei etwa orthogonal zum zweiten Federelement 42, 52 angeordnet. Der Steg 43 des ersten Federsystems 4 ist beabstandet vom Steg 53 des zweiten Führungssystems 5 angeordnet. Das Kupplungselement 3 weist weiterhin wenigstens ein in etwa parallel zu den Federsystemen 4, 5 angeordnetes erstes Führungssystem 31 auf. Dieses erste Führungssystem 31 des Kupplungselementes 3 dient dazu, dass das Kupplungselement 3 in den Führungsschienen 21, 22, 23, 24 des Kabelkanalelementes 1 leicht verschiebbar anordenbar ist.

Weiterhin weist das Kupplungselement 3 wenigstens ein von seiner Oberfläche wegragendes, in etwa orthogonal zum ersten Führungselement 31 angeordnetes zweites Führungselement 32 auf.

Das zweite Führungselement 32 führt einerseits zu einer mechanischen Stabilisierung des Kupplungselementes 3 und dient weiterhin dazu, dass das Kupplungselement 3 durch Betätigen des zweiten Führungselementes 32 an der Seitenwand 2 des Kabelkanalelementes 1 verschiebbar ist. Das zweite Führungselement 32 weist in diesem Ausführungsbeispiel eine geringere Höhe auf als das erste Führungselement 31, wobei das erste Führungselement 31 und das zweite Führungselement 32 in diesem Ausführungsbeispiel auf der Oberfläche des Kupplungselementes 3 einstückig miteinander verbunden sind.

Das Kupplungselement 3 weist ein Element 10, welches aus einem elektrisch leitfähigen Werkstoff hergestellt ist, auf, wobei das Mittel 10 in einer vom ersten Führungselement 31 und vom zweiten Führungselement 32 gebildeten Aufnahmeraum positioniert ist.

Das Mittel 10 ist von seiner Fläche etwa rechteckig ausgebildet und weist an seinen freien Enden jeweils eine Öffnung 12 auf. Die Öffnung 12 ist ebenfalls prismatisch ausgebildet, wobei an der Öffnung 12 des Mittels 10 jeweils einander gegenüberliegend angeordnete Kontaktmittel 14 angeordnet sind.

In diesem Ausführungsbeispiel sind die Kontaktmittel 14 so ausgebildet, dass sie über ein etwa dreieckförmiges Kontaktelement 13 verfügen, welches über ein Verbindungsmittel 11 mit dem Mittel 10 verbunden ist. Dabei ist das Verbindungsmittel 11 in etwa einem spitzen Winkel von der Oberfläche des Mittels 10 angeordnet, während das Kontaktelement 13 in etwa einem rechten Winkel zur Oberfläche des Mittels 10 angeordnet ist. Durch diese Geometrie des Kontaktmittels 14 ist einerseits sichergestellt, dass das Kupplungselement 3 an den Stirnseiten der Seitenwand 2 des Kabelkanalelementes 1 positioniert und fixiert ist, während gleichzeitig über den Werkstoff des Mittels 10 die elektrische Wirkverbindung zur Seitenwand 2 des Kabelkanalelementes 1 herstellbar ist.

Das Mittel 10 ist in diesem Ausführungsbeispiel weiterhin so ausgebildet, dass es eine Öffnung 15 aufweist, die so ausgebildet ist, dass diese das Federsystem 4, 5 umfänglich umgibt.

Das Kupplungselement 3 weist weiterhin zwei etwa zentrisch angeordnete Positionierelemente 7 auf, die im Querschnitt etwa kreisförmig ausgebildet sind und die in hier nicht dargestellte Öffnungen des Mittels 10 einbringbar sind. Somit ist eine einfache und schnelle Montage des Mittels 10 am Kupplungselement 3 problemlos möglich.

Das Mittel 10 ist in diesem Ausführungsbeispiel stoffschlüssig über eine an sich bekannte Verklebung am Kupplungselement 3 angeordnet.

Es liegt jedoch auch im Rahmen der Erfindung, dass das Mittel 10 über die am Kupplungselement 3 angeordneten wegragenden Rastelemente 8 kraftschlüssig und/oder formschlüssig anordenbar ist.

Weiterhin ist das Mittel 10 des Kupplungselementes 3 so ausgebildet, dass es zwei Vertiefungen 16 aufweist. Die Vertiefung 16 führt dazu, dass das Mittel 10 selbst über die Geometrie / Ausdehnung dieser Vertiefung 16 stabilisiert bzw. versteift ist.

Weiterhin vorteilhaft ist, dass das Mittel 10 bei der Montage auf bzw. im Kupplungselement 3 in dort eingebrachte, äquivalente Vertiefungen 30 einführbar und somit nicht verschiebbar angeordnet ist. Somit ist bei bestimmungsgemäßem Gebrauch des Kupplungselementes 3 an der Seitenwand 2 der Kabelkanalelemente 1 sichergestellt, dass bei Montage bzw. Demontage das Mittel 10 kraftschlüssig bzw. formschlüssig am Kupplungselement 3 angeordnet ist und bleibt.

Dies führt weiterhin vorteilhafterweise dazu, dass das Kupplungselement 3 mit dem daran angeordneten Mittel 10 zur Verbindung sowie zum Potenzialausgleich von Kabelkanalelementen 1 aus metallischen Werkstoffen und andererseits auch durch Entfernen des Mittels 10 zur Verbindung bzw. Montage von Kabelkanalelementen 1 aus polymeren Werkstoffen sehr gut geeignet ist.

In einer weiteren vorteilhaften Ausgestaltung der Erfindung werden die Positionierelemente 7 durch eine Verformung bzw. Deformierung so verändert, dass das Mittel 10 formschlüssig am Kupplungselement 3 angeordnet ist. In diesem Ausführungsbeispiel ist das Mittel 10 so ausgebildet, dass die Kontaktelemente 13 etwa parallel zum Federsystem 4, 5 bzw. zum ersten Führungselement 31 angeordnet sind. Es liegt jedoch auch im Rahmen der Erfindung, dass die Kontaktmittel 14 so am Mittel 10 angeordnet sind, dass die Kontaktelemente 13 rechtwinklig zum Federsystem 4, 5 bzw. zum ersten Führungselement 31 angeordnet sind und somit etwa parallel zum zweiten Führungselement 32.

Das erste Federelement 41, 51 des Federsystems 4, 5 weist an seinem dem Steg 43, 53 gegenüberliegenden freien Ende wenigstens eine orthogonal zum Steg 43, 53 ausgebildete Fläche 44, 54 auf. Diese Fläche 44, 54 des Federsystems 4, 5 führt einerseits zu einer leichten Verschiebbarkeit des Kupplungselementes 3 an der Seitenwand 2 des Kabelkanalelementes 1 und liegt im Montagezustand, wie er in der Fig. 1 dargestellt ist, an der Stirnseite der Stirnwand 2 des Kabelkanalelementes 1 so an, dass es bündig an der Außenseite der Seitenwand 2 des Kabelkanalelementes 1 angeordnet ist.

Ein weiterer Vorteil dieser Ausführungsform des Kupplungselementes 3 besteht darin, dass das erste Federelement 41 des ersten Federsystems 4 in etwa parallel versetzt gegenüberliegend zum ersten Federelemente 51 des zweiten Federsystems 5 angeordnet ist.

Dies führt vorteilhafterweise dazu, dass insbesondere im Montagezustand, wie er in der Fig. 1 dargestellt ist, das Kupplungselement 3 über das erste Federsystem 4 an der Stirnseite der Seitenwand 2 des Kabelkanalelementes 1 unverschiebbar positioniert und über das zweite Federsystem 5 an der Seitenwand 2 des Kabelkanalelementes 1 fixiert ist.

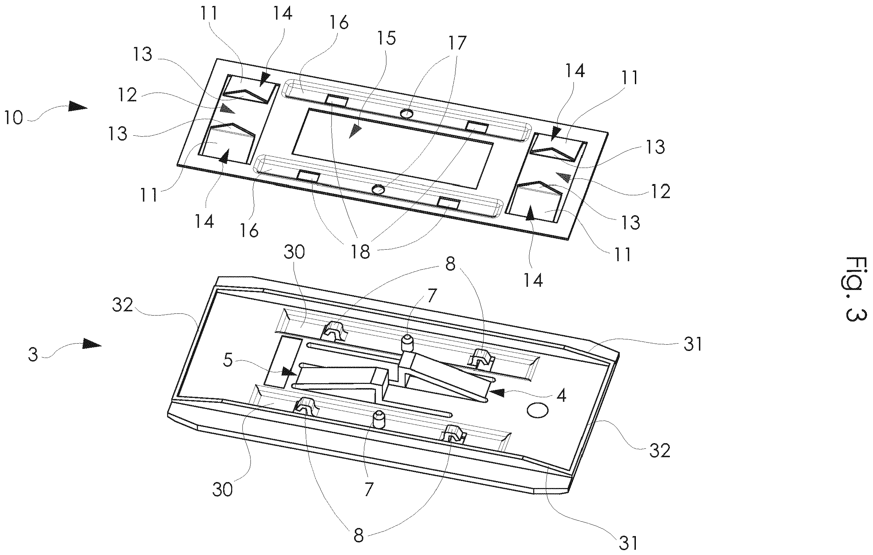

In der Figur 3 ist eine perspektivische Darstellung des Kupplungselementes 3 sowie beabstandet dazu des Mittels 10 des erfindungsgemäßen Kabelkanalsystems dargestellt. Das Kupplungselement 3 weist die Federsysteme 4, 5 auf, die etwa parallel zum ersten Führungssystem 31 angeordnet sind. Weiterhin weist das Kupplungselement 3 ein von seiner Oberfläche wegragendes, in etwa orthogonal zum ersten Führungssystem 31 angeordnetes zweites Führungselement 32 auf.

Das erste Führungselement 31 und das zweite Führungselement 32 umschließen einen Aufnahmeraum, in den das Mittel 10 einbringbar ist.

Das Kupplungselement 3 weist weiterhin in diesem Ausführungsbeispiel zwei Vertiefungen 30 auf, die zwischen dem Federsystem 4, 5 und dem ersten Führungselement 31 etwa parallel zu diesem angeordnet sind. Die Vertiefung 30 weist in diesem Ausführungsbeispiel eine Tiefe auf, die etwa der Wandstärke des Kupplungselementes 3 entspricht.

In der Vertiefung 30 des Kupplungselementes 3 sind in diesem Ausführungsbeispiel jeweils zwei Rastelemente 8 sowie ein Positionierelement 7 angeordnet.

Das Positionierelement 7 weist in diesem Ausführungsbeispiel eine Höhe auf, die etwa der Höhe des ersten Führungselementes 31 entspricht.

Die Rastelemente 8, die in diesem Beispiel etwa äquidistant von dem Positionierelement 7 in der Vertiefung 30 des Kupplungselementes 3 angeordnet sind, weisen eine Höhe auf, die größer ist als die Wandstärke des Kupplungselementes 3 in diesem Ausführungsbeispiel etwa 3 mm.

Es liegt jedoch auch im Rahmen der Erfindung, dass das Rastelement 8 sowie das Positionierelement 7 an einer beliebigen Stelle des Kupplungselementes 3 angeordnet sein können. Dies ist abhängig von den jeweiligen Anforderungen der Kabelkanalelemente 1 sowie des mit dem Kupplungselement 3 zu verbindenden Mittels 10.

Das Mittel 10, welches in diesem Ausführungsbeispiel aus dem metallischen Werkstoff Stahl hergestellt ist, ist etwa rechteckig ausgebildet und weist in seinem Zentrum eine Öffnung 15 auf. Die Öffnung 15 ist so dimensioniert, dass sie bei bestimmungsgemäßem Gebrauch des Mittels 10 am Kupplungselement 3 die Federsysteme 4, 5 des Kupplungselementes 3 umschließt und die Öffnungen 9 abdeckt.

Das Mittel 10 weist weiterhin an seinen freien Enden jeweils eine Öffnung 12 auf, an der zwei voneinander beabstandete Kontaktmittel 14 angeordnet sind.

Die Kontaktmittel 14 weisen ein Kontaktelement 13 auf, welches über ein Verbindungselement 11 einstückig mit dem Mittel 10 verbunden ist. Das Kontaktelement 13 des Mittels 10 ist in diesem Ausführungsbeispiel in etwa einem rechten Winkel zur Oberfläche des Mittels 10 angeordnet und weist einen etwa dreieckförmigen Querschnitt auf.

Es liegt jedoch auch im Rahmen der Erfindung, dass das Kontaktelement 13 mehrere dreieckförmig ausgebildete Kontaktelemente am Verbindungselement 11 aufweist. Die Kontaktmittel 14 sind in diesem Ausführungsbeispiel so angeordnet, dass das Kontaktelement 13 in etwa parallel zur Längsseite des Mittels 10 angeordnet ist.

Die Kontaktmittel 14 sind einander gegenüberliegend beabstandet voneinander angeordnet in der Öffnung 12 des Mittels 10 angeordnet. Es liegt jedoch auch im Rahmen der Erfindung, dass insbesondere das Kontaktelement 13 so am Mittel 10 angeordnet ist, dass es etwa parallel zu den schmalen freien Enden des Mittels 10 angeordnet ist.

Es ist weiterhin möglich, dass das Mittel 10 auch in der Öffnung 15 angeordnete, hier nicht dargestellte Kontaktmittel 14 aufweisen kann.

Das Mittel 10 weist in dieser Ausführungsform weiterhin jeweils eine parallel zu den Längsseiten angeordnete Vertiefung 16 auf, die zwischen den Öffnungen 12 und parallel zur Öffnung 15 angeordnet sind. Diese Vertiefungen 16 des Mittels 10 weisen in diesem Ausführungsbeispiel eine Tiefe von etwa 2 mm auf.

Die Tiefe der Vertiefung 16 des Mittels 10 entspricht in diesem Ausführungsbeispiel etwa der Tiefe der Vertiefung 30 des Kupplungselementes 3.

In der Vertiefung 16 des Mittels 10 sind Öffnungen 17 und 18 eingebracht. Die Öffnung 17 ist in diesem Ausführungsbeispiel kreisrund ausgebildet und dient dazu, bei der Montage des Mittels 10 an dem Kupplungselement 3 auf die kreisförmig ausgebildeten Positionierelemente 7 aufgesetzt zu werden. Die Öffnungen 18 in der Vertiefung 16 sind in diesem Ausführungsbeispiel prismatisch ausgebildet und äquidistant zur Öffnung 17 angeordnet.

Bei bestimmungsgemäßer Montage des Mittels 10 an dem Kupplungselement 3 erfolgt eine Positionierung der Öffnung 17 am Positionierelement 7 und nachfolgend ein Einbringen des Mittels 10 in den durch das erste Führungselement 31 und das zweite Führungselement 32 umschlossenen Aufnahmeraum des Kupplungselementes 3, sowie eine kraftschlüssige Verbindung durch Hinterrasten der in der Vertiefung 30 des Kupplungselements 3 angeordneten Rastelemente 8 in den Öffnungen 18 des Mittels 10.

Das Mittel 10 ist somit kraftschlüssig im bzw. am Kupplungselement 3 angeordnet und kann bei Demontage und Entsorgung des erfindungsgemäßen Kabelkanalsystems werkstoffgerecht vom Kupplungselement 3, welches aus einem polymeren Werkstoff hergestellt ist, getrennt und entsorgt werden.

Es liegt jedoch auch im Rahmen der Erfindung, dass das Mittel 10 über an sich bekannte Verklebungen bzw. Verschweißungen am Kupplungselement 3 stoffschlüssig fixiert ist.

Die Vertiefung 16 des Mittels 10 weist in diesem Ausführungsbeispiel eine Breite von etwa 20% der Breite des Mittels 10, in diesem Ausführungsbeispiel etwa 7 mm auf.

Weiterhin weist die Vertiefung 16 des Mittels 10 eine Länge auf, die etwa 65% der Gesamtlänge des Mittels 10 entspricht, in diesem Ausführungsbeispiel etwa 63 mm.

Es liegt jedoch auch im Rahmen der Erfindung, dass das Mittel 10 bzw. das Kupplungselement 3 geringer bzw. größer dimensionierte Vertiefungen 16, 30 aufweist, dies ist jeweils abhängig von der erforderlichen Steifigkeit bzw. Stabilität des Mittels 10 bzw. des Kupplungselementes 3.

Ein weiterer Vorteil dieser Ausführungsform besteht darin, dass bei bestimmungsgemäßer Montage des Mittels 10 am Kupplungselement 3 die Vertiefung 16 des Mittels 10 in der Vertiefung 30 des Kupplungselementes 3 angeordnet ist und dass bei der Montage des Kupplungselementes 3 mit dem Mittel 10 an den Seitenwänden 2 eines Kabelkanalelementes 1 die Vertiefung 16 mit der Vertiefung 30 so in Wirkverbindung steht, dass das Mittel 10 nicht von dem Kupplungselement 3 verschoben werden kann.

Das erfindungsgemäße Kabelkanalsystem umfassend Kabelkanalelemente 1, welche mittels wenigstens einem Kupplungselement 3 einfach und kostengünstig sowie schnell in ihrer Längsrichtung aneinander fügbar sind, führt somit zu einer schnelleren und kostengünstigeren Montage als bisher aus dem Stand der Technik bekannt.

## Patentansprüche

1. Kabelkanalsystem, umfassend Kabelkanalelemente (1), wenigstens ein Kupplungselement (3) sowie wenigstens ein Element (10), wobei die Kabelkanalelemente (1) mittels des wenigstens eines Kupplungselements (3) in ihrer Längsrichtung aneinander fügbar sind und das Kupplungselement (3) aus einem elektrisch nicht leitfähigen Werkstoff hergestellt ist, wobei die Kabelkanalelemente (1) aus einem etwa U-förmigen Kanalunterteil, sowie insbesondere einer daran anordenbaren Abdeckung bestehen, wobei das Kupplungselement (3) lösbar und/oder verschiebbar in die freien Endbereiche der Kabelkanalelemente (1) einsetzbar ist, wobei das an den Endbereichen eines Kabelkanalelementes (1) an mindestens einer der Seitenwand (2) geführte Kupplungselement (3) wenigstens zwei Federsysteme (4, 5) aufweist, **dadurch gekennzeichnet, dass** das Kupplungselement (3) über das wenigstens eine Element (10), welches wenigstens teilweise aus einem elektrisch leitfähigem Werkstoff hergestellt ist, in etwa rechteckig ausgebildet ist, im Zentrum eine Öffnung (15) aufweist, die so dimensioniert ist, dass sie die Federsysteme (4, 5) umschließt, an gegenüberliegenden Enden wenigstens ein Kontaktmittel (14) aufweist, an dessen freien Ende jeweils wenigstens ein im Querschnitt dreiecksförmig ausgebildetes Kontaktelement (13) angeordnet ist, und stoffschlüssig, kraftschlüssig und/oder formschlüssig mit dem Kupplungselement (3) verbunden ist, von der Seitenwand (2) des Kabelkanalelements (1) beabstandet, mit dieser in Wirkverbindung stehend, angeordnet ist, wobei die Kontaktelemente (13) an gegenüberliegenden Enden des Elements (10) jeweils mit einem von zwei stirnseitig montierten Kabelkanalelementen (1) in Kontakt stehen und eine elektrische Wirkverbindung zum Potentialausgleich zwischen den Kanalelementen (1) realisieren.

2. Kabelkanalsystem nach Anspruch 1, **dadurch gekennzeichnet, dass** das Element (10) wenigstens eine weitere Öffnung (12) aufweist.

3. Kabelkanalsystem nach Anspruch 1, **dadurch gekennzeichnet, dass** das Kontaktelement (13) über wenigstens ein Verbindungsmittel (11) mit dem Element (10) verbunden ist.

4. Kabelkanalsystem nach Anspruch 2, **dadurch gekennzeichnet, dass** zwei Kontaktmittel (14) einander gegenüberliegend an der Öffnung (12) des Elements (10) angeordnet sind.

5. Kabelkanalsystem nach mindestens einem der vorhergehenden Ansprüche, **dadurch gekennzeichnet, dass** die Federsysteme (4, 5) etwa parallel über eine Öffnung (6) voneinander beabstandet angeordnet sind, wobei ein erstes Federelement (41, 51) in etwa einem spitzen Winkel zu einem zweiten Federelement (42, 52) über wenigstens einen Steg (43, 53) beabstandet, miteinander verbunden ist.

6. Kabelkanalsystem nach mindestens einem der vorhergehenden Ansprüche, **dadurch gekennzeichnet, dass** das Kupplungselement (3) wenigstens ein von seiner Oberfläche wegragendes Rastelement (8) aufweist, über welches das Element (10) kraftschlüssig mit dieser verbindbar ist.

7. Kabelkanalsystem nach mindestens einem der vorhergehenden Ansprüche, **dadurch gekennzeichnet, dass** das Element (10) an seinen freien Enden von wenigstens einem Führungselement (31, 32) des Kupplungselementes (3) begrenzend angeordnet ist.

8. Kabelkanalsystem nach Anspruch 5, **dadurch gekennzeichnet, dass** das Kupplungselement (3) im Montagezustand über wenigstens einen Steg (43, 53) des Federsystems (4, 5) an der Stirnseite der Seitenwand (2) des Kabelkanalelements (1) anliegt.

9. Kabelkanalsystem nach Anspruch 5, **dadurch gekennzeichnet, dass** im Montagezustand eine Fläche (44, 54) des Federsystems (4, 5) in etwa bündig an der Außenseite der Seitenwand (2) des Kabelkanalelements (1) anliegt.

## Claims

1. Cable conduit system, comprising cable conduit elements (1), at least one coupling element (3), and at least one element (10), wherein the cable conduits (1) can be joined to one another in their longitudinal direction by means of the at least one coupling element (3), and the coupling element (3) is made of a non-electrically conductive material, wherein the cable conduit elements (1) consist of an approximately U-shaped conduit under-part, as well as, in particular, a cover which can be arranged on the under-part, wherein the coupling element (3) is inserted in a detachable and/or displaceable manner into the free end regions of the cable conduit elements (1), wherein the coupling element (3), which is guided in the end regions of a cable conduit element (1) on at least one of the side walls (2), comprises at least two spring systems (4, 5), **characterised in that** the coupling element (3) is configured as approximately rectangular over the at least one element (10) which is made at least partially of an electrically conductive material, and exhibits in the centre an opening (15), which is dimensioned in such a way that it surrounds the spring systems (4, 5), comprises at opposing ends at least one contact means (14), at the free end of which is arranged at least one contact element (13) configured as triangular in cross-section, and is connected by metallurgical joining, non-positive fit, and/or positive fit to the coupling element (3), is spaced at a distance from the side wall (2) of the cable conduit element (1), is in working connection with the said element, wherein the contact elements (13) are in contact at opposing ends of the element (10) in each case with one of two cable conduit elements (1) mounted on the face side, and establish an electrical working connection between the conduit elements (1) for the purpose of equipotential bonding.

2. Cable conduit system according to claim 1, **characterised in that** the element (10) exhibits at least one further opening (12).

3. Cable conduit system according to claim 1, **characterised in that** the contact element (13) is connected by at least one connection means (11) to the element (10).

4. Cable conduit system according to claim 2, **characterised in that** two contact means (14) are arranged opposite one another at the opening (12) of the element (10).

5. Cable conduit system according to any one of the preceding claims, **characterised in that** the spring systems (4, 5) are arranged approximately parallel over an opening (6), spaced at a distance from one another, wherein a first spring element (41, 51) is connected to a second spring element (42, 52), but they are spaced at a distance from one another by at least one web (43, 53).

6. Cable conduit system according to any one of the preceding claims, **characterised in that** the coupling element (3) comprises at least one engagement element (8) projecting from its surface, by means of which the element (10) can be connected to this by non-positive means.

7. Cable conduit system according to any one of the preceding claims, **characterised in that** the element (10) is arranged at its free ends so as to be delimited by at least one guide element (31, 32) of the coupling element (3).

8. Cable conduit system according to claim 5, **characterised in that** the coupling element (3), in the installed state is in contact by means of at least one web (45, 53) of the spring system (4, 5) on the face side of the side wall (2) of the cable conduit element (1).

9. Cable conduit system according to claim 5, **characterised in that,** in the installed state, one surface (44, 54) of the spring system (4, 5) is in contact essentially flush on the outer side of the side wall (2) of the cable conduit element (1).

## Revendications

1. Système de chemins de câbles comportant des éléments de chemins de câbles (1), au moins un élément de couplage (3) ainsi qu'au moins un élément (10), les éléments de chemins de câbles (1) pouvant être assemblés les uns aux autres dans leur sens longitudinal par au moins un élément de couplage (3) et l'élément de couplage (3) étant fabriqué dans un matériau électriquement non conducteur, les éléments de chemins de câbles (1) étant constitués d'une partie inférieure de chemin sensiblement en forme de U, et notamment d'un couvercle ajustable sur cette dernière, l'élément de couplage (3) pouvant être mis en place de manière amovible et/ou coulissante sur les zones d'extrémité libres des éléments de chemins de câbles (1), l'élément de couplage (3) mené sur l'une au moins des parois latérales (5) dans les zones d'extrémité d'un élément de chemins de câbles (1) présentant au moins deux systèmes à ressort (4, 5), **caractérisé en ce que** l'élément de couplage (3) présente au centre, au-dessus de l'au moins un élément (10), lequel est fabriqué au moins partiellement en un matériau électriquement conducteur, conformé de manière sensiblement rectangulaire, une ouverture (15), laquelle est dimensionnée de telle sorte qu'elle enserre les systèmes à ressort (4, 5), présente aux extrémités opposées au moins un moyen de contact (14), sur l'extrémité libre duquel est disposé respectivement au moins un élément de contact (13) conformé dans sa section transversale en forme de triangle, et raccordé par complémentarité de matériau, par complémentarité des forces et/ou par complémentarité des formes avec l'élément de couplage (3), est disposé à distance de la paroi latérale (2) de l'élément de chemins de câbles (1), en liaison active avec celle-ci, les éléments de contact (13) étant en contact, aux extrémités opposées de l'élément (10), avec respectivement l'un des deux éléments de chemins de câble (1) montés sur la face frontale et réalisant une liaison active équipotentielle entre les éléments de chemins de câbles (1).

2. Système de chemins de câbles selon la revendication 1, **caractérisé en ce que** l'élément (10) présente au moins une ouverture (12) supplémentaire.

3. Système de chemins de câbles selon la revendication 1, **caractérisé en ce que** l'élément de contact (13) est raccordé à l'élément (10) à travers au moins un moyen de raccordement (11).

4. Système de chemins de câbles selon la revendication 2, **caractérisé en ce que** deux moyens de contact (14) sont disposés à l'opposé l'un de l'autre sur l'ouverture (12) de l'élément (10).

5. Système de chemins de câbles selon au moins une des revendications précédentes, **caractérisé en ce que** les systèmes à ressort (4, 5) sont disposés à distance l'un de l'autre, de façon sensiblement parallèle, sur une ouverture (6), un premier élément à ressort (41, 51) étant raccordé dans un angle sensiblement aigu à un second élément à ressort (42, 52), en maintenant un écart d'au moins un montant (43, 53).

6. Système de chemins de câbles selon au moins une des revendications précédentes, **caractérisé en ce que** l'élément de couplage (3) présente au moins un élément d'encliquetage (8) en saillie par rapport à sa surface, par le biais duquel l'élément (10) est raccordable à celui-ci par complémentarité des forces.

7. Système de chemins de câbles selon au moins une des revendications précédentes, **caractérisé en ce que** l'élément (10) est disposé à ses extrémités libres à la limite d'au moins un élément de guidage (31, 32) de l'élément de couplage (3).

8. Système de chemins de câbles selon la revendication 5, **caractérisé en ce que** l'élément de couplage (3) est, en situation montée, en appui par au moins un montant (43, 53) du système à ressort (4, 5), sur la face frontale de la paroi latérale (2) de l'élément de chemins de câbles (1).

9. Système de chemins de câbles selon la revendication 5, **caractérisé en ce que,** en situation montée, une surface (44, 54) du système à ressort (4, 5) est en appui de manière sensiblement affleurante sur la face extérieure de la paroi latérale (2) de l'élément de chemins de câbles (1).
